# EUROPÄISCHE PATENTANMELDUNG

(11) **EP 3 346 145 A1**
(43) Veröffentlichungstag der Anmeldung: **11.07.2018**
(21) Anmeldenummer: 17150333.7
(22) Anmeldetag: 05.01.2017
(51) Int. Cl.: F16B 13/06, F16B 31/02, F16B 37/14

(54) **VORRICHTUNG ZUR DREHMOMENTBEGRENZUNG MIT DREI STEGEN**

(71) Anmelder: HILTI Aktiengesellschaft, 9494 Schaan (LI)
(72) Erfinder: Shimahara, Hideki, 9472 Grabs (CH); Infanger, Erich, 7220 Schiers (CH)
(74) Vertreter: Hilti Aktiengesellschaft Corporate Intellectual Property

(57) **Zusammenfassung**

Die Erfindung betrifft eine Vorrichtung zur Drehmomentbegrenzung aufweisend ein Halteelement für eine Mutter oder einen Schraubenkopf, wobei das Halteelement in einem rückwärtigen Bereich des Halteelements ein Kopfteil mit einem Mitnahmeprofil zur drehfesten Kopplung des Kopfteils mit einem Setzwerkzeug aufweist, und das Halteelement in einem vorderen Bereich des Halteelements ein Aufnahmeteil mit einer Aufnahme zum drehfesten Aufnehmen der Mutter beziehungsweise des Schraubenkopfs aufweist. Erfindungsgemäss ist vorgesehen, dass das Halteelement drei drehmomentübertragende Stege aufweist, welche das Aufnahmeteil und das Kopfteil verbinden, und welche eine Sollbruchstelle bilden. Die Erfindung betrifft ferner eine Befestigungsanordnung bestehend aus einer solchen Vorrichtung und einem Spreizanker.

## Beschreibung

Die Erfindung betrifft eine Vorrichtung zur Drehmomentbegrenzung gemäss dem Oberbegriff des Anspruchs 1. Eine solche Vorrichtung ist ausgestattet mit einem Halteelement für eine Mutter oder einen Schraubenkopf, wobei das Halteelement in einem rückwärtigen Bereich des Halteelements ein Kopfteil mit einem Mitnahmeprofil zur drehfesten Kopplung des Kopfteils mit einem Setzwerkzeug aufweist, und das Halteelement in einem vorderen Bereich des Halteelements ein Aufnahmeteil mit einer Aufnahme zum drehfesten Aufnehmen der Mutter beziehungsweise des Schraubenkopfs aufweist. Die Erfindung betrifft ferner eine Befestigungsanordnung enthaltend eine solche Vorrichtung und einen Spreizanker.

Aus der DE 102010043167 A1 ist eine gattungsgemässe Vorrichtung zur Drehmomentbegrenzung bekannt. Die Vorrichtung ist kronenartig mit einem Kopfteil und einem Aufnahmeteil mit einer Mutter ausgebildet, wobei zwischen dem Kopfteil und dem Aufnahmeteil mit der Mutter eine Sollbruchstelle vorgesehen ist, welche beim Erreichen eines Grenzdrehmoments bricht. Die Sollbruchstelle wird durch sechs Stege gebildet, die zwischen dem Kopfteil und dem Aufnahmeteil äquidistant angeordnet sind.

Ähnliche kronenartige Vorrichtungen zur Drehmomentbegrenzung sind in der Internationalen Patentanmeldung mit dem PCT-Aktenzeichen PCT/EP2016/072232, der FR 2598855 A1 und der US 4215600 A beschrieben. Gemäss US 4215600 A können im Inneren des Aufnahmeteils für die Mutter einstückig mit dem Aufnahmeteil ausgebildete Klemmvorsprünge vorgesehen sein, welche seitlich gegen die Mutter wirken.

Aus der DE 102011106696 A1 geht eine Schraube mit einem mehrteiligen Kopf hervor, welcher eine äussere Hülse aufweist, die um ein Innenteil des Kopfs herum drehbar ist.

Die EP1353080 B1 zeigt ein Drehmomentbegrenzungselement für Spreizanker.

Aufgabe der Erfindung ist es, eine Vorrichtung zur Drehmomentbegrenzung anzugeben, welche bei geringem Aufwand, insbesondere Herstellungsaufwand, eine besonders gute Bruchpräzision und Zuverlässigkeit gewährleistet, sowie eine Befestigungsanordnung anzugeben, welche eine solche Vorrichtung mit einem Spreizanker kombiniert.

Die Aufgabe wird erfindungsgemäss durch eine Vorrichtung zur Drehmomentbegrenzung mit den Merkmalen des Anspruchs 1 und eine Befestigungsanordnung mit den Merkmalen des Anspruchs 7 gelöst. Bevorzugte Ausführungsformen der Vorrichtung sind in den abhängigen Ansprüchen angegeben.

Eine erfindungsgemässe Vorrichtung zur Drehmomentbegrenzung ist dadurch gekennzeichnet, dass das Halteelement drei, insbesondere genau drei, drehmomentübertragende Stege aufweist, welche das Aufnahmeteil und das Kopfteil verbinden, und welche eine Sollbruchstelle, insbesondere eine Drehmoment-Sollbruchstelle bilden.

Im Gegensatz zu Vorrichtungen des Standes der Technik, bei denen die Sollbruchstelle durch sechs drehmomentübertragende Stege oder ein ringartiges Element gebildet ist, ist erfindungsgemäss die Sollbruchstelle durch genau drei drehmomentübertragende Stege gebildet, welche das Aufnahmeteil und das Kopfteil verbinden. Im Rahmen der Erfindung wurde in überraschender Weise erkannt, dass durch solch eine Ausgestaltung eine besonders geringe Streuung in den Bruchdrehmomenten und somit eine besonders gute Bruchpräzision und zugleich eine besonders robuste Vorrichtung erhalten werden kann. Denn verglichen mit einer Ausführung mit sechs oder mehr drehmomentübertragenden Stegen sind bei der erfindungsgemässen Ausgestaltung mit drei drehmomentübertragenden Stege relativ grosse Stegquerschnitte gegeben. Grosse Stegquerschnitte wiederum lassen sich häufig fertigungstechnisch besonders gut kontrollieren, insbesondere wenn das Halteelement klein ist und/oder insbesondere wenn das Halteelement ein Gussteil ist, so dass auch bei grösseren Fertigungstoleranzen die Bruchpräzision gross ist. Zugleich ist mit drei drehmomentübertragenden Stegen eine ausreichend grosse Zahl von drehmomentübertragenden Stegen vorhanden, um eine gute Kraftübertragung ohne Tendenz zu einem Kippen zu realisieren, was einer unerwünschten Belastung und somit einer potenziellen Schwächung der drehmomentübertragenden Stege mit potenziell negativen Auswirkungen auf die Bruchpräzision wirksam entgegenwirkt. Die Erfindung nutzt somit die Erkenntnis aus, dass bei einer Anordnung mit drei drehmomentübertragenden Stegen der Einfluss von Fertigungstoleranzen vergleichsweise gering und andererseits die Kraftübertragung besonders gut ist. Auf Grundlage dieser Erkenntnis stellt die Erfindung eine Vorrichtung zur Drehmomentbegrenzung zur Verfügung, bei der bei geringem Herstellungsaufwand eine besonders gute Bruchpräzision und Zuverlässigkeit gegeben ist.

Die Mutter kann beispielsweise eine DIN-Mutter sein. Sie weist zweckmässigerweise eine Durchgangsöffnung, vorzugsweise mit einem Innengewinde, auf, wobei das Innengewinde insbesondere auf eine Gewindestange schraubbar ist. Die Gewindestange kann vorzugsweise der Bolzen eines Spreizankers sein. Die Mutter kann also insbesondere eine Schraubmutter sein. Anstelle mit einer Mutter kann die erfindungsgemässe Vorrichtung auch mit einem Schraubenkopf zum Einsatz kommen, der insbesondere drehfest mit einem Schraubenschaft verbunden ist. Die Mutter beziehungsweise der Schraubenkopf kann als Teil der Vorrichtung zur Drehmomentbegrenzung oder als separates Teil angesehen werden.

Das Mitnahmeprofil dient zum drehfesten Ankoppeln des Abtriebs des Setzwerkzeugs an das Kopfteil und insbesondere zum Aufbringen eines Drehmoments vom Setzwerkzeug auf das Kopfteil, insbesondere eines in Axialrichtung gerichteten Drehmoments. Das Mitnahmeprofil kann zum Beispiel ein Aussenmehrkantprofil, insbesondere ein Aussensechskantprofil, sein, das umfangsseitig am Kopfteil angeordnet ist. Das Setzwerkzeug kann beispielsweise ein Schraubenschlüssel oder eine Handmaschine sein.

Die Aufnahme ist vorzugsweise nach vorne hin zumindest teilweise offen, insbesondere damit die Mutter an deren Vorderseite zugänglich ist und eine Gewindestange von vorne in die Mutter einschraubbar ist beziehungsweise damit ein Schraubenschaft aus dem Halteelement heraustreten kann. Die nach vorne hin zumindest teilweise offene Ausgestaltung der Aufnahme kann auch ein Einbringen der Mutter beziehungsweise des Schraubenkopfs bei der Fertigung von vorne her ermöglichen. Vorzugsweise kann das Kopfteil einen Durchgang für die Gewindestange aufweisen, wobei der Durchgang in die Aufnahme für die Mutter mündet, und wobei der Durchgang nach hinten hin offen ist. Demgemäss kann die in die Mutter eingeschraubte Gewindestange hinten wieder aus der Mutter und dem Halteelement austreten, das heisst die Gewindestange kann das Halteelement durchlaufen.

Die Aufnahme kann insbesondere eine im Halteelement gebildete Ausnehmung sein, in welche die Mutter beziehungsweise der Schraubenkopf eingelegt wird. Die Aufnahme ist vorzugsweise umfangsseitig durch das Aufnahmeteil begrenzt und/oder rückseitig durch das Kopfteil begrenzt. Das Aufnahmeteil bildet vorzugsweise eine Hülse, welche die Aufnahme umgibt. Die Mutter beziehungsweise der Schraubenkopf wird drehfest in der Aufnahme angeordnet, insbesondere mit dem Aufnahmeteil drehfest gekoppelt in der Aufnahme angeordnet, das heisst zwischen dem Aufnahmeteil und der in der Aufnahme angeordneten Mutter beziehungsweise dem in der Aufnahme angeordneten Schraubenkopf besteht eine Verbindung, vorzugsweise eine Formschlussverbindung, welche eine Übertragung eines Drehmoments, insbesondere eines axial gerichteten Drehmoments, zwischen dem Aufnahmeteil einerseits und der Mutter beziehungsweise dem Schraubenkopf andererseits ermöglicht. Vorzugsweise kann die Aufnahme für die drehfeste Verbindung zwischen Aufnahmeteil einerseits und Mutter beziehungsweise Schraubenkopf andererseits ein weiteres Mitnahmeprofil, beispielsweise ein Innenmehrkantprofil, insbesondere ein Innensechskantprofil, aufweisen, welches mit einem Aussenprofil der Mutter beziehungsweise des Schraubenkopfs korrespondiert.

Insbesondere ist die erfindungsgemässe Vorrichtung so ausgestaltet, dass die drehmomentübertragenden Stege bei einem Grenzdrehmoment unter Aufhebung der Verbindung zwischen Kopfteil und Aufnahmeteil vorrangig brechen. Unter vorrangigem Brechen kann insbesondere verstanden werden, dass die drehmomentübertragenden Stege bei einem geringeren Drehmoment brechen als das Kopfteil und als das Aufnahmeteil. Die drehmomentübertragenden Stege bilden somit eine Drehmoment-Sollbruchstelle, insbesondere für ein in Axialrichtung gerichtetes Drehmoment. Die drehmomentübertragenden Stege bilden also das schwächste Glied in der Drehmomentübertragung, welches als solches zuerst bricht. Es können, schon aufgrund von Fertigungsschwankungen, weitere stegartige Strukturen, beispielsweise Grate, zwischen Kopfteil und Aufnahmeteil vorhanden sein, die dann aber nicht wesentlich zur Drehmomentübertragung beitragen, und die somit keine drehmomentübertragenden Stege sind.

Soweit hier von der Axialrichtung, Radialrichtung und/oder Umfangsrichtung die Rede ist, soll sich dies insbesondere auf dieselbe Achse beziehen, welche insbesondere die Längs- und/oder Symmetrieachse der Vorrichtung sein kann. Die Richtungsangaben vorne, hinten, vorderseitig, rückwärtig usw. sollen hier vorzugsweise einheitlich verwendet werden.

Besonders bevorzugt ist es, dass die drei drehmomentübertragenden Stege äquidistant angeordnet sind, insbesondere um die Längsachse der Vorrichtung herum. Demgemäss sind benachbarte drehmomentübertragende Stege jeweils unter demselben Winkelabstand zueinander angeordnet. Vorzugsweise ist das Halteelement, zumindest dessen drehmomentübertragenden Stege, um die Längsachse rotationsymmetrisch. Durch diese Ausgestaltung ist eine besonders gute Kraftübertragung möglich und unerwünschte Kippmomente, welche potenziell die Bruchpräzision beinträchtigen könnten, werden vermieden.

Insbesondere kann die Mutter beziehungsweise der Schraubenkopf ein Aussensechskantprofil aufweisen, was schon im Hinblick auf die Verfügbarkeit und den Herstellungsaufwand vorteilhaft sein kann. Die Mutter kann also insbesondere eine Sechskantmutter sein.

Demgemäss weist die Aufnahme zweckmässigerweise sechs Schlüsselflächen und insbesondere ein Innensechskantprofil auf. Diese Schlüsselflächen können mit den sechs Schlüsselflächen der Mutter beziehungsweise des Schraubenkopfs korrespondieren. Die einzelnen Schlüsselflächen der Aufnahme können, beispielsweise für eine Klemmung der Mutter beziehungsweise des Schraubenkopfs, auch Vorsprünge oder Ausnehmungen aufweisen.

Besonders bevorzugt ist es, dass die drei drehmomentübertragenden Stege zu dreien der sechs Schlüsselflächen der Aufnahme versetzt, insbesondere in Umfangsrichtung versetzt, angeordnet sind. Demgemäss sind die drehmomentübertragenden Stege in der axialen Fortsetzung genau drei der sechs Schlüsselflächen angeordnet, und die drei drehmomentübertragenden Stege überspannen insbesondere nicht die Kanten des Innensechskantprofils der Aufnahme. Hierdurch ist eine besonders gute Entkopplung der drehmomentübertragenden Stege von dem Aufnahmemechanismus für die Mutter beziehungsweise den Schraubenkopf möglich und unerwünschten Kerbwirkungen kann in konstruktiv besonders einfacher Weise entgegengewirkt werden, was beides wiederum die Bruchpräzision weiter verbessern kann.

Vorzugsweise kann vorgesehen sein, dass das Halteelement zumindest einen an einer Klemm-Schlüsselfläche der Aufnahme angeordneten, in die Aufnahme vorstehenden Klemmvorsprung zum Festlegen, insbesondere Festklemmen, der Mutter beziehungsweise des Schraubenkopfs in der Aufnahme aufweist. Hierdurch kann einem unerwünschten Herausrutschen der Mutter beziehungsweise des Schraubenkopfs aus der Ausnahme einfach und zuverlässig entgegengewirkt werden. Insbesondere kann der Klemmvorsprung die Mutter beziehungsweise den Schraubenkopf an die gegenüberliegende Schlüsselfläche pressen und die Mutter beziehungsweise den Schraubenkopf hierbei kraft- und/oder formschlüssig axial sichern. Diejenige Schlüsselfläche der Aufnahme, an welcher der Klemmvorsprung angeordnet ist, wird hier Klemm-Schlüsselfläche genannt. Besonders zweckmässig ist es, dass die drei drehmomentübertragenden Stege versetzt, insbesondere in Umfangsrichtung versetzt, zu der zumindest einen Klemm-Schlüsselfläche mit dem Klemmvorsprung angeordnet sind. Hierdurch können Spannungen, welche durch den Klemmvorsprung generiert werden, besonders einfach und zugleich wirksam von den drehmomentübertragenden Stegen entkoppelt werden, was wiederum vorteilhaft für die Bruchpräzision sein kann. Vorzugsweise ist der Klemmvorsprung durch eine Bombierung am Aufnahmeteil gebildet. Der Klemmvorsprung kann eine Einlaufschräge für die Mutter beziehungsweise den Schraubenkopf aufweisen, um die Montage zu vereinfachen.

Für eine besonders zuverlässige Sicherung bei weiterhin guter Bruchpräzision weist das Halteelement vorzugsweise zumindest drei Klemmvorsprünge zum Festlegen der Mutter beziehungsweise des Schraubenkopfs in der Aufnahme auf, die jeweils an verschiedenen Klemm-Schlüsselflächen der Aufnahme angeordneten sind, wobei die drei drehmomentübertragenden Stege, versetzt, insbesondere in Umfangsrichtung versetzt, zu diesen drei mit den Klemmvorsprüngen versehenen Klemm-Schlüsselflächen angeordnet sind.

Eine weitere bevorzugte Ausgestaltung der Erfindung liegt darin, dass das Mitnahmeprofil des Kopfteils Kopfteil-Schlüsselflächen aufweist, welche parallel zu den Schlüsselflächen der Aufnahme verlaufen. Vorzugsweise verlaufen sämtliche Kopfteil-Schlüsselflächen des Kopfteils parallel zu jeweils einer Schlüsselfläche der Aufnahme. Das kann die drehmomentübertragenden Stege weiter vor unerwünschten Einflüssen entlasten, was vorteilhaft für die Bruchpräzision sein kann. Insbesondere kann das Mitnahmeprofil ein Sechskantprofil sein, welches dieselbe Winkellage um die Längsachse der Vorrichtung hat wie das Sechskantprofil der Aufnahme. Demgemäss weist das Kopfteil vorzugsweise sechs Kopfteil-Schlüsselflächen auf.

Vorzugsweise besteht die Vorrichtung zur Drehmomentbegrenzung aus einem Gussmaterial, insbesondere einem Zinkdruckgussmaterial, was eine besonders einfache, günstige und präzise Fertigung ermöglicht. Zweckmässigerweise wird ein Zinkdruckgussmaterial gewählt, welches sich vor seinem Bruch nur wenig plastisch deformiert, was abermals vorteilhaft für die Bruchpräzision sein kann.

Die Erfindung betrifft auch eine Befestigungsanordnung bestehend aus einem Spreizanker und einer erfindungsgemässen Vorrichtung zur Drehmomentbegrenzung, wobei in der Aufnahme eine Mutter oder ein Schraubenkopf eines Spreizankers angeordnet ist. Unter einem Spreizanker kann in fachüblicher Weise insbesondere ein Anker verstanden werden, welcher ein Spreizelement, beispielsweise eine Spreizhülse, aufweist, das zum Verankern bei Zug in der Gewindestange radial nach aussen versetzt wird.

Merkmale die im Zusammenhang mit der erfindungsgemässen Vorrichtung zur Drehmomentbegrenzung erläutert werden, können auch bei der erfindungsgemässen Befestigungsanordnung zum Einsatz kommen, so wie auch umgekehrt Merkmale, die im Zusammenhang mit der erfindungsgemässen Befestigungsanordnung erläutert werden, auch bei der erfindungsgemässen Vorrichtung zur Drehmomentbegrenzung zum Einsatz kommen können.

Die Erfindung wird nachfolgend anhand bevorzugter Ausführungsbeispiele näher erläutert, die schematisch in den beiliegenden Figuren dargestellt sind, wobei einzelne Merkmale der nachfolgend gezeigten Ausführungsbeispiele im Rahmen der Erfindung grundsätzlich einzeln oder in beliebiger Kombination realisiert werden können. In den Figuren zeigen schematisch:
- Figur 1:: eine perspektivische Darstellung einer Ausführungsform einer erfindungsgemässen Vorrichtung zur Drehmomentbegrenzung, beispielhaft mitsamt einer Mutter, mit Blick auf die Vorderseite der Vorrichtung;
- Figur 2:: eine perspektivische Darstellung der Vorrichtung aus Figur 1 mit Blick auf die Rückseite der Vorrichtung;
- Figur 3:: eine Längsschnittansicht der Vorrichtung zur Drehmomentbegrenzung aus Figur 1 und 2, also eine Schnittansicht in einer Längsschnittsebene der Vorrichtung;
- Figur 4:: eine Ansicht des Halteelements der Vorrichtung zur Drehmomentbegrenzung aus den Figuren 1 bis 3 ohne Mutter von unten;
- Figur 5:: eine Befestigungsanordnung, bestehend aus einer Vorrichtung zur Drehmomentbegrenzung gemäss Figuren 1 bis 4 und einem Spreizanker, in perspektivischer Ansicht mit Blick auf die Rückseite der Vorrichtung zur Drehmomentbegrenzung; und
- Figur 6:: die Befestigungsanordnung gemäss Figur 5 nach dem Abreissen des Kopfteils bei Erreichen des Grenzdrehmoments.

Die Figuren zeigen ein Ausführungsbeispiel einer erfindungsgemässen Vorrichtung zur Drehmomentbegrenzung. Wie die Figuren zeigen weist die Vorrichtung zum einen beispielhaft eine Mutter 30 mit einem Innengewinde 32 und zum anderen ein kronenförmiges Halteelement 1 auf, in welchem die Mutter 30 gehalten ist. Die Mutter 30 ist nur beispielhaft gezeigt und insbesondere kann anstelle der Mutter auch ein Schraubenkopf vorgesehen werden.

Das Halteelement 1 weist in seinem rückwärtigen Bereich ein Kopfteil 10, in seinem vorderen Bereich ein dem Kopfteil 10 nach vorne hin vorgelagertes Aufnahmeteil 60, sowie drei drehmomentübertragende Stege 40 auf. Die drehmomentübertragenden Stege 40 verbinden das Kopfteil 10 und das Aufnahmeteil 60 und bilden eine Drehmoment-Sollbruchstelle zwischen Kopfteil 10 und Mutter 30. Die drehmomentübertragenden Stege 40 erstrecken sich ausgehend vom Kopfteil 10 radial nach aussen zum Aufnahmeteil 60 hin, welches aussendurchmessergrösser als das Kopfteil 10 ist. Zwischen benachbarten drehmomentübertragenden Stegen 40 sind das Kopfteil 10 und das Aufnahmeteil 60 voneinander beabstandet. Insbesondere ist zwischen zwei benachbarten drehmomentübertragenden Stegen 40 zwischen dem Kopfteil 10 und dem Aufnahmeteil 60 jeweils ein schlitzartiger Durchbruch gebildet, welcher von aussen in die Aufnahme 61 führt. Die drehmomentübertragenden Stege 40 sind äquidistant um die Längsachse 99 der Vorrichtung herum angeordnet, wobei die Vorrichtung vorzugsweise rotationssymmetrisch um die Längsachse 99 ist.

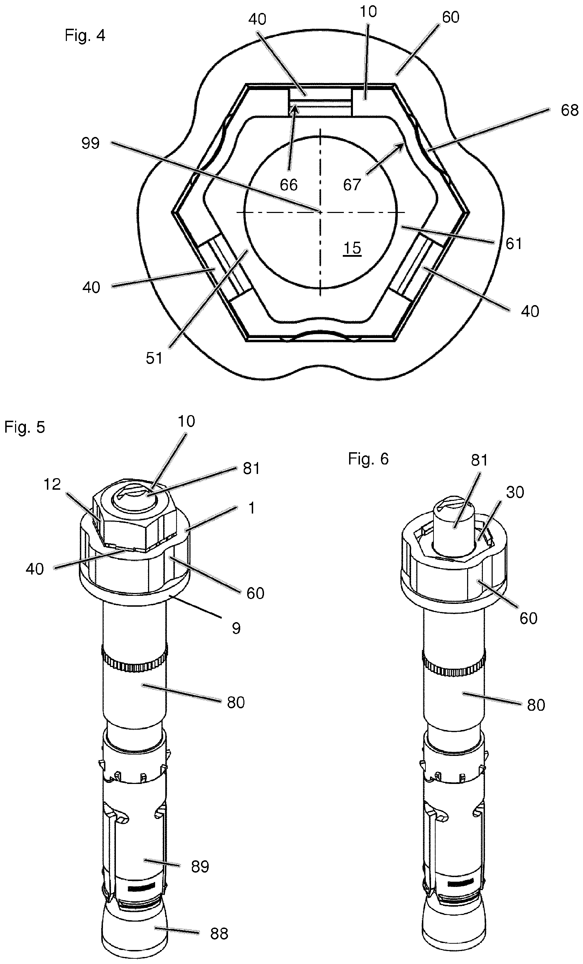

Im Aufnahmeteil 60 ist eine Aufnahme 61 ausgebildet, in welcher die Mutter 30 aufgenommen ist. Zur formschlüssigen Drehmomentübertragung vom Aufnahmeteil 60 auf die Mutter 30 weist die Aufnahme 61, wie insbesondere in Figur 4 erkennbar ist, sechs Schlüsselflächen 66 auf, welche ein Innensechskantprofil bilden, und welche mit einem Aussensechskantprofil der Mutter 30 korrespondieren. Drei dieser sechs Schlüsselflächen 66 sind als Klemm-Schlüsselflächen 67 ausgebildet. Als solche weisen sie jeweils einen Klemmvorsprung 68 auf, der am Aufnahmeteil 60 radial nach innen in die Aufnahme 61 vorsteht. Die insgesamt drei Klemmvorsprünge 68 sichern die Mutter 30 gegen ein Herausfallen aus der Aufnahme 61 nach vorne.

Wie insbesondere Figur 4 weiter zeigt, ist jeder der drei drehmomentübertragenden Stege 40 in der axialen Fortsetzung genau einer der drei Schlüsselflächen 66 angeordnet, das heisst die verbleibenden drei Schlüsselflächen 66 sind in Umfangsrichtung zu den drehmomentübertragenden Stegen versetzt. Jeder drehmomentübertragende Steg 40 ist somit genau einer Schlüsselfläche 66 zugeordnet, und die Verlängerung der Kanten des Innensechskantprofils der Aufnahme 61 ist somit stets stegfrei. Da also die drehmomentübertragenden Stege 40 zu den Kanten des Innensechskantprofils in Umfangsrichtung versetzt sind, kann eine besonders gute Entkopplung zwischen diesen Elementen gegeben sein.

Wie Figur 4 weiter zeigt, sind die Schlüsselflächen 66, denen die drehmomentübertragenden Stege 40 zugeordnet sind, zweckmässigerweise keine Klemm-Schlüsselflächen 67, das heisst die drei drehmomentübertragenden Stege 40 sind zu den drei Klemm-Schlüsselflächen 67 und/oder den drei Klemmvorsprüngen 68 in Umfangsrichtung, um die Längsachse 99, versetzt. Hierdurch kann eine besonders gute Entkopplung der an den Klemmvorsprüngen 68 beim Klemmvorgang auftretenden Spannungen von den drehmomentübertragenden Stegen 40 erhalten werden.

Das Kopfteil 10 weist ein, beispielsweise als Aussensechskantprofil mit sechs Kopfteil-Schlüsselflächen 18 ausgebildetes, Mitnahmeprofil 12 auf, mittels dem ein Drehmoment von einem nicht dargestellten Setzwerkzeug formschlüssig auf das Kopfteil 10 übertragen werden kann. Das Aufnahmeteil 60 und das Kopfteil 10 sind koaxial angeordnet und definieren die gemeinsame Längsachse 99 der Vorrichtung. Das Kopfteil 10 weist einen Durchgang 15 auf, welcher mit der Aufnahme 61 des Aufnahmeteils 60 fluchtet, so dass eine in die Mutter 30 eingeschraubte Gewindestange 81 auf der Rückseite des Aufnahmeteils 60 entlang der Längsachse 99 aus dem Aufnahmeteil 60 austreten kann. Die Längsachse 99 verläuft durch die Aufnahme 61 und den in die Aufnahme 61 einmündenden Durchgang 15 hindurch. Die sechs Kopfteil-Schlüsselflächen 18 und die Schlüsselflächen 66 der Aufnahme 61 verlaufen jeweils parallel zueinander, das heisst das Aussensechskantprofil des Kopfteils 10 und das Innensechskantprofil der Aufnahme 61 sind unter gleichem Drehwinkel angeordnet.

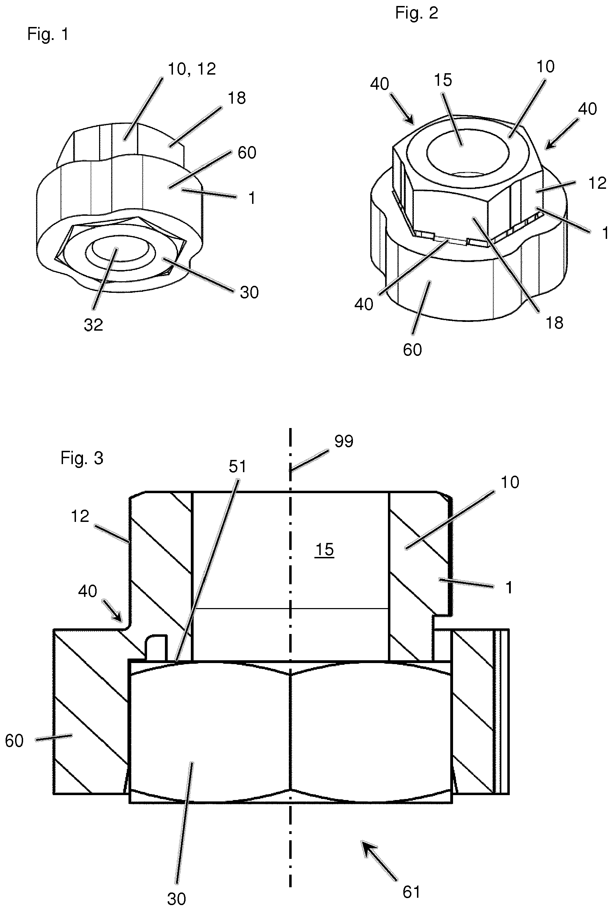

Wie insbesondere in Figur 3 erkennbar ist, weist das Kopfteil 10 einen Axialanschlag 51 auf, welcher an der rückwärtigen Stirnseite der Aufnahme 61 angeordnet ist, und welcher einen rückwärtigen Anschlag für die Mutter 30 bildet. Der Axialanschlag 51 begrenzt eine Axialbewegung der in der Aufnahme 61 aufgenommenen Mutter 30 relativ zum Kopfteil 10 nach hinten hin. Der Axialanschlag 51 ist hier beispielhaft durch einen ringförmigen, vorzugsweise geschlossen ringförmigen, Vorsprung gebildet, welcher am Kopfteil 10 in die Aufnahme 61 vorsteht.

Die Figuren 5 und 6 zeigen eine Befestigungsanordnung bestehend aus der Vorrichtung zur Drehmomentbegrenzung und einem Spreizanker 80. Bei solchen mechanischen Ankern kann eine Installation mit einer definierten Vorspannung durch ein Anziehen mit einem definierten Grenzdrehmoment beispielsweise zur Vermeidung von Abplatzungen im Substrat bei Montage in Randnähe relevant sein. Der Spreizanker 80 ist beispielhaft als sogenannter Hülsenanker ausgeführt. Er weist eine Gewindestange 81 sowie ein Spreizelement 89 auf, welches hier als eine die Gewindestange 81 umgebende Spreizhülse ausgeführt ist. An der Gewindestange 81 ist, insbesondere in einem vorderen Bereich, ein Spreizkörper mit einer, vorzugsweise konischen, Schrägfläche 88 angeordnet, welche sich nach hinten hin verjüngt. Zwischen der Schrägfläche 88 der Gewindestange 81 und dem Spreizelement 89 ist ein Keilgetriebe gebildet, welches eine axiale Bewegung der aus der Gewindestange 81 und dem Spreizkörper mit Schrägfläche 88 gebildeten Einheit relativ zum Spreizelement 89 in eine radiale Bewegung des Spreizelements 89 umwandeln kann, und somit den Anker zum Ableiten von Zuglasten in der Gewindestange 81 an der Wand eines Bohrlochs verankern kann.

In der Befestigungsanordnung der Figuren 5 und 6 ist die Mutter 30 der Vorrichtung zur Drehmomentbegrenzung auf die Gewindestange 81 des Spreizankers 80 aufgeschraubt, wobei die Gewindestange 81 des Spreizankers 80 die Vorrichtung zur Drehmomentbegrenzung durchläuft, also vorderseitig in die Vorrichtung eintritt und rückseitig aus der Vorrichtung austritt, und wobei die Schrägfläche 88 des Spreizankers 80 und das Spreizelement 89 des Spreizankers 80 der Vorrichtung zur Drehmomentbegrenzung vorgelagert sind.

Bei der Montage wird der Spreizanker 80 der Befestigungsanordnung durch eine Unterlegscheibe 9 hindurch in ein Bohrloch eingesteckt. Mittels eines Setzwerkzeugs wird sodann über das Mitnahmeprofil 12 ein Drehmoment auf das Kopfteil 10 ausgeübt. Dieses Drehmoment wird über die drehmomentübertragenden Stege 40 auf das Aufnahmeteil 60 und vom Aufnahmeteil 60 weiter auf die Mutter 30 übertragen. Dies wiederum bewirkt eine Zugkraft in der Gewindestange 81 des Spreizankers 80, was wiederum das Spreizelement 89 radial belastet und hierdurch den Spreizanker 80 verankert.

Erreicht das am Kopfteil 10 aufgebrachte Drehmoment ein vorbestimmtes Grenzdrehmoment, so scheren die drehmomentübertragenden Stege 40 ab, mit der Folge, dass das Kopfteil 10 vom Aufnahmeteil 60 abgetrennt wird und keine weitere Drehmomentübertragung mehr auf das Aufnahmeteil 60 und die Mutter 30 stattfindet. Die Vorrichtung zur Drehmomentbegrenzung wirkt daher als drehmomentbegrenzende Abreissmutter. Nach dem Abscheren der drehmomentübertragenden Stege 40 ist das Kopfteil 10 vom Aufnahmeteil 60 getrennt und fällt vom Aufnahmeteil 60 ab. Das überbleibende Aufnahmeteil 60 mit Mutter 30 ist in Figur 6 gezeigt.

## Patentansprüche

1. Vorrichtung zur Drehmomentbegrenzung aufweisend ein Halteelement (1) für eine Mutter (30) oder einen Schraubenkopf, wobei
das Halteelement (1) in einem rückwärtigen Bereich des Halteelements (1) ein Kopfteil (10) mit einem Mitnahmeprofil (12) zur drehfesten Kopplung des Kopfteils (10) mit einem Setzwerkzeug aufweist, und
das Halteelement (1) in einem vorderen Bereich des Halteelements (1) ein Aufnahmeteil (60) mit einer Aufnahme (61) zum drehfesten Aufnehmen der Mutter (30) beziehungsweise des Schraubenkopfs aufweist,
**dadurch gekennzeichnet,**
**dass** das Halteelement (1) drei drehmomentübertragende Stege (40) aufweist, welche das Aufnahmeteil (60) und das Kopfteil (10) verbinden, und welche eine Sollbruchstelle bilden.

2. Vorrichtung nach Anspruch 1,
**dadurch gekennzeichnet,**
**dass** die drei drehmomentübertragenden Stege (40) äquidistant angeordnet sind.

3. Vorrichtung nach einem der vorstehenden Ansprüche,
**dadurch gekennzeichnet,**
**dass** die Aufnahme (61) sechs Schlüsselflächen (66) aufweist, wobei die drei drehmomentübertragenden Stege (40) zu dreien der sechs Schlüsselflächen (66) der Aufnahme (61) versetzt angeordnet sind.

4. Vorrichtung nach einem der vorstehenden Ansprüche,
**dadurch gekennzeichnet,**
**dass** das Halteelement (1) zumindest einen an einer Klemm-Schlüsselfläche (67) der Aufnahme (61) angeordneten, in die Aufnahme (61) vorstehenden Klemmvorsprung (68) zum Festlegen der Mutter (30) beziehungsweise des Schraubenkopfs in der Aufnahme (61) aufweist, wobei die drei drehmomentübertragenden Stege (40) versetzt zu der zumindest einen Klemm-Schlüsselfläche (67) mit dem Klemmvorsprung (68) angeordnet sind.

5. Vorrichtung nach einem der vorstehenden Ansprüche,
**dadurch gekennzeichnet,**
**dass** das Mitnahmeprofil (12) des Kopfteils (10) Kopfteil-Schlüsselflächen (18) aufweist, welche parallel zu den Schlüsselflächen (66) der Aufnahme (61) verlaufen.

6. Vorrichtung nach einem der vorstehenden Ansprüche,
**dadurch gekennzeichnet,**
**dass** sie aus einem Zinkdruckgussmaterial besteht.

7. Befestigungsanordnung bestehend aus einem Spreizanker (80) und einer Vorrichtung zur Drehmomentbegrenzung nach einem der vorstehenden Ansprüche, wobei in der Aufnahme (61) eine Mutter (30) oder ein Schraubenkopf eines Spreizankers (80) angeordnet ist.
